# FASCICULE DE BREVET EUROPEEN

(11) **EP 3 544 762 B1**
(45) Date de publication et mention de la délivrance du brevet: **21.04.2021**
(21) Numéro de dépôt: 17801060.9
(22) Date de dépôt: 23.11.2017
(51) Int. Cl.: B23K 35/26, B23K 35/30, B23K 35/02, C22C 1/00, C22F 1/14, C22C 1/04, C22C 5/06, C22C 13/00, B22F 9/16, B22F 9/24

(54) **FORMULATION D'UN COMPOSÉ INTERMÉTALLIQUE AG-SN**
FORMULIERUNG EINER INTERMETALLISCHEN AG-SN-VERBINDUNG
FORMULATION OF AN AG-SN INTERMETALLIC COMPOUND

(30) Priorité: 24.11.2016 FR 1661461
(43) Date de publication de la demande: 02.10.2019
(73) Titulaire: Valeo Systèmes de Contrôle Moteur, 95892 Cergy - Pontoise (FR); Université de Versailles Saint Quentin en Yvelines, 78035 Versailles Cedex (FR); Centre National de la Recherche Scientifique, 75016 Paris (FR); Université Paris 13, 93430 Villetaneuse (FR)
(72) Inventeur: SCHOENSTEIN, Frédéric, 93430 Villetaneuse (FR); JOUINI, Noureddine, 93430 Villetaneuse (FR); CANAUD, Pauline, 93430 Villetaneuse (FR); MORELLE, Jean-Michel, 45190 Beaugency (FR); TAN, Ky Lim, 94700 Maisons Alfort (FR); MAROTEAUX, Fadila, 78140 Velizy (FR)
(74) Mandataire: Cabinet Novitech
(86) Numéro de dépôt international: PCT/EP2017/080267
(87) Numéro de publication internationale: WO 2018/096061

(56) Documents cités:
- EP-A1- 2 752 270
- WO-A1-98/25721
- CN-A- 104 070 295
- US-A1- 2011 070 122
- US-A1- 2013 084 502

## Description

L'invention se rapporte à un procédé de synthèse d'un composé intermétallique Ag-Sn, notamment destiné à être utilisé comme composé pour brasure et pour impression toner.

L'industrie électronique va réaliser des progrès significatifs dans un avenir proche, suite à une transition complète vers la technologie de brasures sans plomb. La recherche se concentre vers de nouveaux matériaux sans plomb, afin de répondre aux nouvelles réglementations environnementales RoHS européennes.

Une puce électronique classique est reliée à un substrat en cuivre à l'aide d'une brasure. La brasure est constituée d'un matériau qui doit résister à de hautes températures, notamment supérieures à 200°C, et à de fortes contraintes mécaniques. L'ensemble repose sur une semelle, qui permet le transfert de la chaleur de la puce vers un radiateur. La semelle est composée de cuivre ou d'aluminium.

Le choix des matériaux utilisés pour le brasage est important pour la fiabilité des joints assemblés pour l'électronique. Les brasures sans plomb commerciales actuelles sont basées sur des alliages à fort taux d'étain, par exemple ayant une composition de l'eutectique de 3,5% Ag en poids, dont la température de fusion est comprise entre 200°C et 250°C. Les nouvelles générations de puces à base de SiC ou de GaN sont capables de fonctionner à des températures supérieures à 250°C, les brasures sans plomb commerciales ne peuvent plus être utilisées dans ces applications. Par conséquence, il est important de rechercher un matériau qui présente non seulement une bonne conductivité électrique, une bonne résistance aux contraintes mécaniques, mais qui doit également fonctionner à une température supérieure à 250°C et être compatible avec une production en masse.

L'étude des inventeurs s'est portée sur l'intermétallique Ag-Sn et en particulier sur l'intermétallique Ag₃Sn en raison de son point de fusion élevé (environ 480°C). En effet, la température de fusion de la soudure joue un rôle important dans les performances et la fiabilité de la puce électronique qui peut être confrontée à de hautes températures.

L'intermétallique Ag₃Sn est actuellement synthétisé par voie métallurgique. Lorsque la synthèse est réalisée à partir de matériaux massifs ou de lingots d'argent et d'étain purs, la croissance des composés intermétalliques tels que Ag₃Sn se déroule lors de la phase de solidification.

Ces méthodes de synthèse sont coûteuses et ne permettent pas d'obtenir de phase pure. De plus, il est difficile par cette voie d'obtenir une phase sous forme de particules finement divisées et de morphologie contrôlée.

Des méthodes de réduction chimique sont également utilisées pour synthétiser des intermétalliques sans plomb. Ces méthodes sont considérées comme les techniques les plus appropriées pour les procédés de fabrication industriels, car elles sont peu coûteuses et permettent de produire des particules finement divisées de taille micronique ou submicronique.

Des particules intermétalliques Ag-Sn ont déjà été obtenues en utilisant un procédé polyol, un procédé simple de chimie douce. Il n'a cependant pas été possible d'obtenir des phases pures. De plus, on observe la formation de l'étain comme phase majoritaire, accompagnée de faibles quantités d'intermétallique Ag-Sn et d'autres impuretés.

EP 2 752 270 et CN 104 070 295 concernent de la poudre à braser et une pâte à braser mettant en œuvre la poudre à braser.

WO 98/25721 concerne un procédé permettant d'accroitre à température ambiante la résistance à l'état vert de pièces et d'articles obtenus par consolidation de matériaux de type poudre.

US 2011/070122 concerne des compositions d'alliages.

US 2013/084502 concerne des nanoparticules intermétalliques.

Le but de la présente invention est de proposer un procédé de synthèse d'un composé intermétallique Ag-Sn riche en Argent et possédant une haute température de fusion.

L'invention propose ainsi un procédé de synthèse d'un composé intermétallique Ag-Sn comprenant les étapes successives suivantes :
- une étape de fourniture E1 d'un mélange au cours de laquelle une solution d'un mélange d'un sel d'argent et d'un agent protecteur dans un solvant de type polyol est réalisée,
- une première étape de chauffage E2 au cours de laquelle la solution est portée à une température T1 supérieure ou égale à 140°C et inférieure ou égale à 180°C pendant un temps t1 supérieur ou égal à 5 min et inférieur ou égal à 1 h durant cette étape le sel d'argent est réduit par le solvant polyol,
- une étape d'introduction de l'étain E3 au cours de laquelle un sel d'étain et de la soude sont introduits dans la solution,
- une seconde étape de chauffage E4 au cours de laquelle la solution est portée à une température T2 supérieure ou égale à 140°C et inférieure ou égale à 180°C pendant un temps t2 supérieur ou égal à 5 min et inférieur ou égal à 1 h,
- une étape de réduction E5 au cours de laquelle un agent réducteur est introduit dans la solution,
- une troisième étape de chauffage E6 au cours de laquelle la solution est portée à une température T3 supérieure ou égale à 160°C et inférieure ou égale à 240°C pendant un temps t3 supérieur ou égal à 30 min et inférieur ou égal à 24h, durant cette étape le sel d'étain est réduit par l'agent réducteur, et
- une étape de récupération E7 au cours de laquelle le composé intermétallique Ag-Sn obtenu est récupér.

Avantageusement, le procédé de synthèse selon l'invention est simple, peu couteux et permet d'obtenir des phases pures d'intermétallique Ag-Sn riche en argent et ayant un point de fusion élevé.

Le procédé selon l'invention peut également comprendre une ou plusieurs des caractéristiques ci-dessous, considérées individuellement ou selon toutes les combinaisons techniquement possibles :
- un ratio stœchiométrique de 50% de sel d'argent et de 50% de sel d'étain est utilisé ; et/ou
- le sel d'argent utilisé peut être le nitrate d'argent, le chlorure d'argent, l'acétate d'argent, le lactate d'argent ou le diethyldithiocarbamate d'argent ; et/ou
- le sel d'étain utilisé peut être, le chlorure d'étain, le sulfate d'étain, le 2-éthylhexanoate d'étain, l'acétate d'étain ou l'oxalate d'étain et/ou le nitrate d'étain ; et/ou
- le solvant polyol utilisé peut être, l'éthylène glycol, le diéthylène glycol, le 1,2-propanediol, le 1,3-propanediol, le 1,3-butanediol, le 1,4-butanediol, le 1,2-pentanediol ou le 1,5-pentanediol ; et/ou
- l'agent protecteur utilisé peut être un surfactant comme la polyvinylpyrrolidone (PVP),l'oleylamine, la trioctylphosphine ou la 1,10-phénanthroline ; et/ou
- le ratio de la masse d'agent protecteur par rapport à la masse d'argent utilisé est strictement supérieur à 0 et inférieur ou égal à 150 ; et/ou
- l'agent réducteur utilisé peut être, l'hypophosphite de sodium, le borohydrure de sodium, les aminoboranes, les borates ou l'hydrazine ; et/ou
- le ratio de la concentration en agent réducteur par rapport à la concentration en étain est supérieur ou égal à 3 et inférieur ou égal à 150 ; et/ou
- au cours de l'étape de récupération, le composé intermétallique Ag-Sn obtenu est récupéré sous forme de poudre ; et/ou
- l'étape de récupération de l'intermétallique comprend les étapes successives suivantes : refroidir la solution par trempe d'air, laver la solution par une ou plusieurs centrifugations, lavage à l'acétone, un ou deux lavages à l'eau distillée et deux lavages à l'éthanol, et sécher la poudre dans une étuve à 60°C durant au moins 12h ; et/ou
- la température T1 est supérieure ou égale à 150°C et inférieure ou égale à 170°C ; et/ou
- le temps t1 est supérieur ou égal à 20 min et inférieur ou égal à 40 min ; et/ou
- la température T2 est supérieure ou égale à 150°C et inférieure ou égale à 170°C ; et/ou
- le temps t2 est supérieur ou égal à 10 min et inférieur ou égal à 20 min ; et/ou
- la température T3 est supérieure ou égale à 170°C et inférieure ou égale à 240°C ; et/ou
- le temps t3 est supérieur ou égal à 3h et inférieur ou égal à 9h.

L'invention se rapporte également à un composé intermétallique Ag-Sn, notamment destiné au brasage sans plomb et à l'impression toner, par exemple obtenue par le procédé selon l'invention.

Le composé intermétallique Ag-Sn peut comprendre une ou plusieurs des caractéristiques ci-dessous, considérées individuellement ou selon toutes les combinaisons techniquement possibles :
- le composé intermétallique Ag-Sn est pur à au moins 95% ; et/ou
- le composé intermétallique Ag-Sn est constitué de particules de taille moyenne supérieure ou égale à 30 nm et inférieure ou égale à 800 nm ; et/ou
- le composé intermétallique Ag-Sn est constitué de particules de taille moyenne supérieure ou égale à 60 nm et inférieure ou égale à 300 nm ; et/ou
- le composé intermétallique Ag-Sn possède une température de fusion supérieure ou égale à 470°C ; et/ou
- le composé intermétallique est soit l'Ag₃Sn soit la solution solide Ag_{0,77}Sn_{0,23}.

Le composé intermétallique Ag-Sn, par exemple obtenu par le procédé selon l'invention, peut être utilisé comme composé intermétallique pour brasure et/ou comme composé intermétallique pour impression toner.

La présente invention sera mieux comprise à la lumière de la description suivante qui n'est donnée qu'à titre indicatif et qui n'a pas pour but de limiter ladite invention, accompagnée des figures suivantes :
- la figure 1 représente les différentes étapes d'un procédé selon l'invention,
- la figure 2 est une analyse thermo différentielle du composé intermétallique Ag-Sn selon l'exemple 1,
- la figure 3 est un diagramme de taille des particules de composé intermétallique Ag-Sn selon l'exemple 1,
- la figure 4 est une analyse thermo différentielle du composé intermétallique Ag-Sn selon l'exemple 2,
- les figures 5a et 5b représentent les distributions en taille, respectivement en longueur et en largeur, des particules de composé intermétallique Ag-Sn selon l'exemple 2.

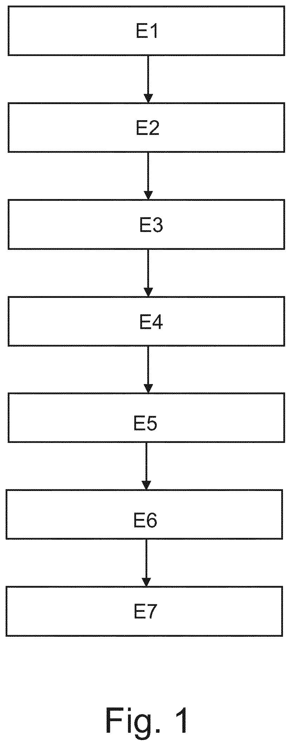

Comme représenté sur la figure 1, l'invention concerne un procédé de synthèse d'un composé intermétallique Ag-Sn comprenant les étapes successives suivante :
- une étape de fourniture d'un mélange E1,
- une première étape de chauffage E2,
- une étape d'introduction d'un sel d'étain E3,
- une seconde étape de chauffage E4,
- une étape de réduction E5,
- une troisième étape de chauffage E6, et
- une étape de récupération de l'intermétallique sous forme de poudre E7.

Le procédé selon l'invention est un procédé polyol de type chimie douce. Le dispositif utilisé est un montage en distillation, permettant notamment de maintenir un faible taux d'hydrolyse et donc d'obtenir des particules métalliques.

Dans une première étape, un mélange est réalisé par ajout d'un agent protecteur à un sel d'argent dissous dans un solvant de type polyol.

Le sel d'argent utilisé peut être le nitrate d'argent et/ou le chlorure d'argent et/ou l'acétate d'argent et/ou le lactate d'argent et/ou le diethyldithiocarbamate d'argent. Ces sels métalliques sont aussi appelés précurseurs métalliques. L'argent est un composé qui se réduit facilement, il n'y a donc pas besoin d'un réducteur fort pour le réduire, un solvant de type polyol est ici suffisant.

L'agent protecteur utilisé peut être la polyvinylpyrrolidone (PVP) et/ou l'oleylamine et/ou la trioctylphosphine et/ou la 1,10-phénanthroline.

Le solvant polyol utilisé peut être l'éthylène glycol et/ou le diéthylène glycol et/ou le 1,2-propanediol et/ou le 1,3-propanediol et/ou le 1,3-butanediol et/ou le 1,4-butanediol et/ou le 1,2-pentanediol et/ou le 1,5-pentanediol. Les polyols possèdent une température d'ébullition élevée, ce qui permet de solubiliser un grand nombre de précurseurs métalliques et d'effectuer des réactions dans un grand intervalle de température.

Le ratio de la masse d'agent protecteur par rapport à la masse de sel d'argent utilisé est strictement supérieur à 0 et strictement inférieur à 150.

Durant la première étape de chauffage, la solution comprenant le sel d'argent, l'agent protecteur et le solvant de type polyol est portée à une température T1 supérieure ou égale à 140°C et inférieure ou égale à 180°C pendant un temps t1 supérieur ou égal à 5 min et inférieur ou égal à 1 h.

La température T1 peut être supérieure ou égale à 150°C et inférieure ou égale à 170°C.

Le temps t1 peut être supérieur ou égal à 20 min et inférieur ou égal à 40 min.

Durant cette étape, le sel d'argent est réduit par le solvant polyol. Les particules d'argent sont recouvertes par l'agent protecteur en solution. L'argent étant facilement réduit par le solvant polyol, la première étape de chauffage n'a pas besoin d'être longue et peut par exemple durer environ 30 min.

Durant l'étape E3 d'introduction de l'étain, un sel d'étain et de la soude sont introduits dans la solution obtenue après la première étape de chauffage comprenant le sel d'argent, l'agent protecteur et le solvant de type polyol à une température T1.

Le sel d'étain utilisé peut être le chlorure d'étain et/ou le sulfate d'étain et/ou le 2-éthylhexanoate d'étain et/ou l'acétate d'étain et/ou l'oxalate d'étain.

Avantageusement, un ratio stœchiométrique de 50% de sel d'argent et de 50% de sel d'étain est utilisé.

Le rôle de la soude est ici de garder le milieu réactionnel basique. Le ratio molaire correspondant au nombre de moles de soude par rapport au nombre de moles d'argent peut être inférieur à 4.

Durant la seconde étape de chauffage, la solution obtenue après l'étape d'introduction de l'étain est portée à une température T2 supérieure ou égale à 140°C et inférieure ou égale à 180°C pendant un temps t2 supérieur ou égal à 5 min et inférieur ou égal à 1 h.

La température T2 peut être supérieure ou égale à 150°C et inférieure ou égale à 170°C.

Le temps t2 peut être supérieur ou égal à 10 min et inférieur ou égal à 20 min.

Durant l'étape de réduction, un agent réducteur est introduit dans la solution obtenue après la seconde étape de chauffage.

L'agent réducteur utilisé est un réducteur fort pouvant être l'hypophosphite de sodium et/ou le borohydrure de sodium et/ou les aminoboranes et/ou les borates et/ou l'hydrazine.

Avantageusement, le ratio de la concentration en agent réducteur par rapport à la concentration en sel d'étain est supérieur ou égal à 3 et inférieur ou égal à 150.

L'étain, contrairement à l'argent, est difficile à réduire, ce qui a conduit à l'utilisation d'un agent réducteur fort. C'est pour cette même raison que la concentration d'agent réducteur est supérieure à celle du sel d'étain.

Durant la troisième étape de chauffage, la solution obtenue après l'étape de réduction est portée à une température T3 supérieure ou égale à 160°C et inférieure ou égale à 240°C pendant un temps t3 supérieur ou égal à 30 min et inférieur ou égal à 24h.

La température T3 peut être supérieure ou égale à 170°C et inférieure ou égale à 240°C.

Le temps t3 peut être supérieur ou égal à 3h et inférieur ou égal à 9h.

Cette troisième étape de chauffage est plus longue que les deux précédentes car la réduction de l'étain par l'agent réducteur est plus difficile, et ce même avec un réducteur fort.

A la fin de cette troisième étape de chauffage, on obtient le composé intermétallique Ag-Sn qui précipite en solution.

Le composé intermétallique Ag-Sn peut maintenant être obtenu par une ultime étape de récupération. Cette étape de récupération peut comprendre un refroidissement de la solution à l'air. Les poudres agglomérées dans le tube à centrifugation peuvent ensuite subir plusieurs lavages suivis de centrifugations afin d'éliminer le surnageant. Les poudres peuvent subir au total deux lavages à l'acétone, un ou deux lavages à l'eau distillée et deux lavages à l'éthanol. Une fois lavées, les poudres peuvent être séchées dans une étuve à 60°C durant au moins 12h.

Le composé ainsi obtenu est ensuite caractérisé par DRX (analyse de Diffraction à Rayon X), par affinement Rietveld à l'aide du logiciel MAUD (Material Analysis Using Diffraction), puis par analyse ATD (Analyse Thermo Différentielle) et ATG (Analyse Thermo Gravimétrique). Ces analyses permettent de déterminer la pureté du produit, sa structure, la taille des particules le constituant et sa température de fusion.

Le composé intermétallique Ag-Sn obtenu selon un procédé de l'invention est pur à au moins 95%.

Le composé intermétallique Ag-Sn peut être constitué de particules sous forme sphérique et/ou sous forme de bâtonnets.

Le composé intermétallique Ag-Sn peut être constitué de particules de taille moyenne supérieure ou égale à 30 nm et inférieure ou égale à 800 nm.

Le composé intermétallique Ag-Sn peut être constitué de particules de taille moyenne supérieure ou égale à 60 nm et inférieure ou égale à 300 nm.

Le composé intermétallique Ag-Sn peut posséder une température de fusion supérieure ou égale à 470°C.

Le composé intermétallique Ag-Sn peut être soit l'Ag₃Sn soit la solution solide Ag_{0,77}Sn_{0,23}.

Les propriétés physiques du composé intermétallique obtenu à partir du procédé selon l'invention en font un composé adapté pour une utilisation comme composé intermétallique pour brasures et/ou pour impression toner.

Les exemples de procédé de synthèse d'un composé intermétallique Ag-Sn suivants ne sont donnés qu'à titre indicatif et ne constituent nullement une limitation.

### Exemple 1 :

Lors de l'étape de fourniture du mélange, 1,43 g de nitrate d'argent (AgNO₃) et 1,43 g de polyvinylpyrrolidone (PVP) sont dispersés dans 200 ml d'éthylène glycol.

Cette solution est ensuite portée à 160°C pendant 30 min lors de la première étape de chauffage.

Lors de l'étape d'introduction du sel d'étain, 1,6 g de chlorure d'étain SnCl₂ et 1,03 g de soude sont introduits dans le mélange.

La solution ainsi obtenue est alors laissée à 160°C pendant 15 min lors de la seconde étape de chauffage.

Lors de l'étape de réduction, 10,13 g de borohydrure de sodium (NaBH₄) sont introduits dans le milieu réactionnel.

La solution est ensuite portée à 180°C pendant 6h lors de la troisième étape de chauffage.

Pour finir, le composé intermétallique est récupéré. La solution obtenue après la troisième étape de chauffage est tout d'abord refroidie par trempe à l'air. Une fois cette solution refroidie, elle est lavée. La solution est répartie dans différents tubes à centrifuger. Le niveau est complété avec de l'acétone. L'ensemble est centrifugé à 7800 rpm durant 10 à 12 min. Le surnageant est éliminé, seules les poudres agglomérées sont conservées dans les tubes à centrifugation. Plusieurs lavages sont nécessaires : 2 lavages à l'acétone, 1 à 2 lavage(s)à l'eau distillée et 2 lavages à l'éthanol. Puis la poudre est séchée dans une étuve à 60°C durant 24h.

La poudre ainsi obtenue est ensuite caractérisée par DRX (analyse par Diffraction à Rayon X), par affinement Rietveld à l'aide du logiciel MAUD (Material Analysis Using Diffraction), puis par analyse ATD (Analyse Thermo Différentielle) et ATG (Analyse Thermo Gravimétrique).

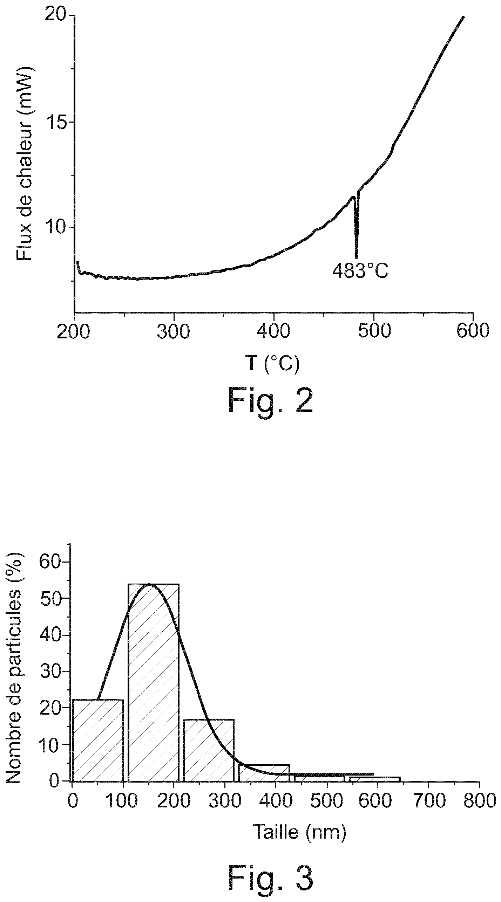

La méthode détaillée dans l'exemple 1 permet d'obtenir le composé intermétallique Ag₃Sn.
On obtient 100% de phase Ag₃Sn de structure orthorhombique.
Comme représenté sur la figure 2, on observe une température de fusion du composé intermétallique de 483°C.
La distribution de taille des particules selon l'exemple 1 est donné en figure 3. On observe pour ces particules isotropes une taille moyenne de 150 nm.

### Exemple 2 :

Lors de l'étape de fourniture du mélange, 1,43 g de nitrate d'argent (AgNO₃) et 1,43 g de polyvinylpyrrolidone (PVP) sont dispersés dans 200 ml d'éthylène glycol.

Cette solution est ensuite portée à 160°C pendant 30 min lors de la première étape de chauffage.

Lors de l'étape d'introduction du sel d'étain, 1,6 g de chlorure d'étain SnCl₂ et 1,03 g de soude sont introduits dans le mélange.

La solution ainsi obtenue est alors portée à 160°C pendant 15 min lors de la seconde étape de chauffage.

Lors de l'étape de réduction, 13,52 g de borohydrure de sodium (NaBH₄) sont introduit dans le mélange.

La solution est ensuite portée à 180°C pendant 6h lors de la troisième étape de chauffage.

Pour finir, le composé intermétallique est récupéré. La solution obtenue après la troisième étape de chauffage est tout d'abord refroidie par trempe à l'air. Une fois cette solution refroidie, elle est lavée. La solution est répartie dans différents tubes centrifugation. Le niveau est complété avec de l'acétone. L'ensemble est centrifugé à 7800 rpm durant 10 à 12 min. Le surnageant est éliminé, seules les poudres agglomérées sont conservées dans les tubes à centrifuger. Plusieurs lavages sont nécessaires : 2 lavages à l'acétone, 1 à 2 lavage(s)à l'eau distillée et 2 lavages à l'éthanol. Puis la poudre est séchée dans une étuve à 60°C durant 24h.

La poudre ainsi obtenue est ensuite caractérisée par DRX (analyse de Diffraction à Rayon X), par affinement Rietveld à l'aide du logiciel MAUD (Material Analysis Using Diffraction), puis par analyse ATD (Analyse Thermo Différentielle) et ATG (Analyse Thermo Gravimétrique).

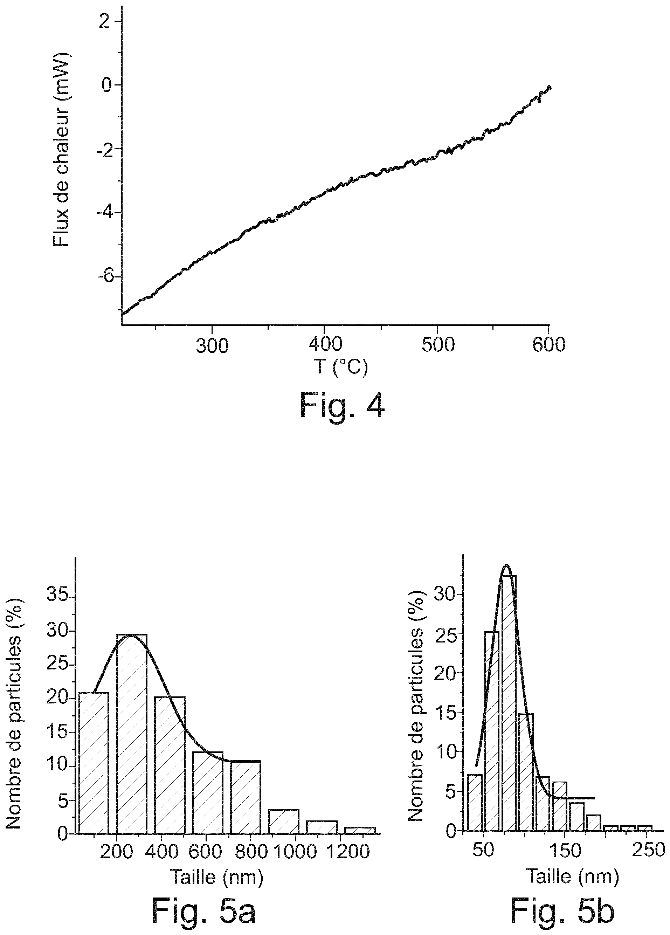

La méthode détaillée dans l'exemple 2 permet d'obtenir la solution solideAg_{0,77}Sn_{0,23}. On obtient 100% de phase Ag_{0,77}Sn_{0,23} de structure hexagonale.
Comme représenté sur la figure 4, aucun pic de fusion n'est observable avant 600°C. Le point de fusion de cette solution solide est donc supérieur à 600°C
Les distributions de taille des particules selon l'exemple 2 sont données en figures 5a et 5b. Ces particules sont sous forme de bâtonnets et possèdent une longueur moyenne de 270 nm et une largeur moyenne de 80 nm.

Bien d'autres modifications et variations se suggèrent d'elles même à l'homme du métier, après réflexion sur les différents modes de réalisation illustrés dans cette demande. Ces modes de réalisation sont donnés à titre d'exemple et ne sont pas destinés à limiter la portée de l'invention, qui est déterminée exclusivement par les revendications ci-dessous.

Dans les revendications, le mot « comprenant » n'exclut pas d'autres éléments ou étapes, et l'utilisation de l'article indéfini « un » ou « une » n'exclut pas une pluralité. Le simple fait que différentes caractéristiques sont énumérées en revendications mutuellement dépendantes n'indique pas qu'une combinaison de ces caractéristiques ne puisse être avantageusement utilisée. Enfin, toute référence numérique utilisée dans les revendications ne doit pas être interprétée comme une limitation de la portée de l'invention.

## Revendications

1. Procédé de synthèse d'un composé intermétallique Ag-Sn comprenant les étapes successives suivantes :
- une étape de fourniture d'un mélange (E1) au cours de laquelle une solution d'un mélange d'un sel d'argent et d'un agent protecteur dans un solvant de type polyol est réalisée,
- une première étape de chauffage (E2) au cours de laquelle la solution est portée à une température T1 supérieure ou égale à 140°C et inférieure ou égale à 180°C pendant un temps t1 supérieur ou égal à 5 min et inférieur ou égal à 1 h, durant cette étape le sel d'argent est réduit par le solvant polyol,
- une étape d'introduction du sel d'étain (E3) au cours de laquelle un sel d'étain et de la soude sont introduits dans la solution,
- une seconde étape de chauffage (E4) au cours de laquelle la solution est portée à une température T2 supérieure ou égale à 140°C et inférieure ou égale à 180°C pendant un temps t2 supérieur ou égal à 5 min et inférieur ou égal à 1 h,
- une étape de réduction (E5) au cours de laquelle un agent réducteur est introduit dans la solution,
- une troisième étape de chauffage (E6) au cours de laquelle la solution est portée à une température T3 supérieure ou égale à 160°C et inférieure ou égale à 240°C pendant un temps t3 supérieur ou égal à 30 min et inférieur ou égal à 24h, durant cette étape le sel d'étain est réduit par l'agent réducteur,
- une étape de récupération (E7) au cours de laquelle le composé intermétallique Ag-Sn obtenu est récupéré.

2. Procédé selon la revendication 1 dans lequel un ratio stœchiométrique de 50% de sel d'argent et de 50% de sel d'étain est utilisé.

3. Procédé selon l'une des revendications précédentes dans lequel le sel d'argent utilisé peut être:
- le nitrate d'argent ; et/ou
- le chlorure d'argent ; et/ou
- l'acétate d'argent ; et/ou
- le lactate d'argent ; et/ou
- le diethyldithiocarbamate d'argent.

4. Procédé selon l'une des revendications précédentes dans lequel le sel d'étain utilisé peut être:
- le chlorure d'étain ; et/ou
- le sulfate d'étain ; et/ou
- le 2-éthylhexanoate d'étain ; et/ou
- l'acétate d'étain ; et/ou
- l'oxalate d'étain ; et/ou
- le nitrate d'étain.

5. Procédé selon l'une des revendications précédentes dans lequel l'agent protecteur utilisé peut être un surfactant comme :
- la polyvinylpyrrolidone (PVP) ; et/ou
- l'oleylamine ; et/ou
- la trioctylphosphine ; et/ou
- la 1,10-phénanthroline.

6. Procédé selon l'une des revendications précédentes dans lequel le ratio de la masse d'agent protecteur par rapport à la masse de sel d'argent utilisé est inférieur à 150.

7. Procédé selon l'une des revendications précédentes dans lequel l'agent réducteur utilisé peut être :
- l'hypophosphite de sodium ; et/ou
- le borohydrure de sodium ; et/ou
- les aminoboranes ; et/ou
- les borates ; et/ou
- l'hydrazine.

8. Procédé selon l'une des revendications précédentes dans lequel le ratio de la concentration en agent réducteur par rapport à la concentration en sel d'étain est supérieur ou égal à 3 et inférieur ou égal à 150.

## Patentansprüche

1. Verfahren zur Synthese einer intermetallischen Ag-Sn-Verbindung, umfassend folgende aufeinanderfolgende Schritte:
- einen Schritt der Bereitstellung eines Gemischs (E1), bei dem eine Lösung eines Gemischs aus einem Silbersalz und einem Schutzmittel in einem Lösungsmittel vom Typ Polyol hergestellt wird,
- einen ersten Schritt der Erhitzung (E2), bei dem die Lösung auf eine Temperatur T1, die größer oder gleich 140°C und kleiner oder gleich 180°C ist, während einer Zeit t1, die größer oder gleich 5 min und kleiner oder gleich 1 h ist, gebracht wird, wobei während dieses Schritts das Silbersalz durch das Polyol-Lösungsmittel reduziert wird,
- einen Schritt der Einleitung von Zinnsalz (E3), bei dem ein Zinnsalz und Natron in die Lösung eingeleitet werden,
- einen zweiten Schritt der Erhitzung (E4), bei dem die Lösung auf eine Temperatur T2, die größer oder gleich 140°C und kleiner oder gleich 180°C ist, während einer Zeit t2, die größer oder gleich 5 min und kleiner oder gleich 1 h ist, gebracht wird,
- einen Schritt der Reduktion (E5), bei dem ein Reduktionsmittel in die Lösung eingeleitet wird,
- einen dritten Schritt der Erhitzung (E6), bei dem die Lösung auf eine Temperatur T3, die größer oder gleich 160°C und kleiner oder gleich 240°C ist, während einer Zeit t3, die größer oder gleich 30 min und kleiner oder gleich 24 h ist, gebracht wird, wobei während dieses Schritts das Zinnsalz durch das Reduktionsmittel reduziert wird,
- einen Schritt der Rückgewinnung (E7), bei dem die erhaltene intermetallische Ag-Sn-Verbindung zurückgewonnen wird.

2. Verfahren nach Anspruch 1, wobei ein stöchiometrisches Verhältnis von 50 % Silbersalz und von 50 % Zinnsalz verwendet wird.

3. Verfahren nach einem der vorstehenden Ansprüche, wobei das verwendete Silbersalz sein kann:
- Silbernitrat; und/oder
- Silberchlorid; und/oder
- Silberacetat; und/oder
- Silberlactat; und/oder
- Silberdiethyldithiocarbamat.

4. Verfahren nach einem der vorstehenden Ansprüche, wobei das verwendete Zinnsalz sein kann:
- Zinnchlorid; und/oder
- Zinnsulfat; und/oder
- Zinn-2-Ethylhexanoat; und/oder
- Zinnacetat; und/oder
- Zinnoxalat; und/oder
- Zinnnitrat.

5. Verfahren nach einem der vorstehenden Ansprüche, wobei das verwendete Schutzmittel ein oberflächenaktives Mittel sein kann, wie:
- Polyvinylpyrrolidon (PVP); und/oder
- Oleylamin; und/oder
- Trioctylphosphin; und/oder
- 1,10-Phenanthrolin.

6. Verfahren nach einem der vorstehenden Ansprüche, wobei das Verhältnis der Masse des Schutzmittels in Bezug auf die Masse des verwendeten Silbersalzes kleiner ist als 150.

7. Verfahren nach einem der vorstehenden Ansprüche, wobei das verwendete Reduktionsmittel sein kann:
- Natriumhypophosphit; und/oder
- Natriumborhydrid; und/oder
- Aminoborane; und/oder
- Borate; und/oder
- Hydrazin.

8. Verfahren nach einem der vorstehenden Ansprüche, wobei das Verhältnis der Reduktionsmittelkonzentration in Bezug auf die Zinnsalzkonzentration größer oder gleich 3 und kleiner oder gleich 150 ist.

## Claims

1. A method for synthesizing an intermetallic compound Ag-Sn comprising the following successive steps:
- a step of providing a mixture (E1) during which a solution of a mixture of a silver salt and of a protective agent in a polyol-type solvent is carried out,
- a first heating step (E2) during which the solution is brought to a temperature T1 greater than or equal to 140°C and less than or equal to 180°C for a time period t1 greater than or equal to 5 min and less than or equal to 1 h, during this step the silver salt is reduced by the polyol solvent,
- a tin salt introduction step (E3) during which a tin salt and soda are introduced in the solution,
- a second heating step (E4) during which the solution is brought to a temperature T2 greater than or equal to 140°C and less than or equal to 180°C for a time period t2 greater than or equal to 5 min and less than or equal to 1 h,
- a reduction step (E5) during which a reducing agent is introduced in the solution,
- a third heating step (E6) during which the solution is brought to a temperature T3 greater than or equal to 160°C and less than or equal to 240°C for a time period t3 greater than or equal to 30 min and less than or equal to 24 h, during this step the tin salt is reduced by the reducing agent,
- a recovery step (E7) during which the obtained intermetallic compound Ag-Sn is recovered.

2. The method according to claim 1, wherein a stoichiometric ratio of 50% of silver salt and of 50% of tin salt is used.

3. The method according to any of the preceding claims, wherein the used silver salt may consist of:
- silver nitrate, and/or
- silver chloride, and/or
- silver acetate, and/or
- silver lactate, and/or
- silver diethyldithiocarbamate.

4. The method according to any of the preceding claims, wherein the used tin salt may consist of:
- tin chloride, and/or
- tin sulfate, and/or
- tin 2-ethylhexanoate, and/or
- tin acetate, and/or
- tin oxalate, and/or
- tin nitrate.

5. The method according to any of the preceding claims, wherein the used protective agent may consist of a surfactant such as:
- polyvinylpyrrolidone (PVP), and/or
- oleylamine, and/or
- trioctylphosphine, and/or
- 1,10-phenanthroline.

6. The method according to any of the preceding claims, wherein the ratio of the protective agent mass to the used silver salt mass is less than 150.

7. The method according to any of the preceding claims, wherein the used reducing agent may consist of:
- sodium hypophosphite, and/or
- sodium borohydride, and/or
- aminoboranes, and/or
- borates, and/or
- hydrazine.

8. The method according to any of the preceding claims, wherein the ratio of the reducing agent concentration to the tin salt concentration is greater than or equal to 3 and less than or equal to 150.
